# EUROPÄISCHE PATENTSCHRIFT

(11) **EP 0 436 688 B1**
(45) Veröffentlichungstag und Bekanntmachung des Hinweises auf die Patenterteilung: **29.09.1993**
(21) Anmeldenummer: 90910566.0
(22) Anmeldetag: 24.07.1990
(51) Int. Cl.: B63H 11/04, H02K 44/04

(54) **VERFAHREN UND VORRICHTUNG ZUM ANTREIBEN VON WASSERFAHRZEUGEN**
PROCESS AND DEVICE FOR PROPELLING WATERCRAFT
PROCEDE ET DISPOSITIF POUR LA PROPULSION DE VEHICULES AQUATIQUES

(30) Priorität: 28.07.1989 DE 3924996
(43) Veröffentlichungstag der Anmeldung: 17.07.1991
(73) Patentinhaber: LAUKIEN, Günther, D-76287 Rheinstetten (DE)
(72) Erfinder: LAUKIEN, Günther, D-76287 Rheinstetten (DE)
(74) Vertreter: Witte, Alexander, Dr.-Ing.
(86) Internationale Anmeldenummer: DE9000558
(87) Internationale Veröffentlichungsnummer: WO9101915

(56) Entgegenhaltungen:
- GB-A- 1 238 803
- GB-A- 2 115 616
- GB-A- 8 046 21
- US-A- 3 662 554

## Beschreibung

Die Erfindung betrifft ein Verfahren zum Antreiben von Wasserfahrzeugen, bei dem in einem von Umgebungswasser durchströmten rohrförmigen Bereich ein magnetisches Feld sowie ein elektrisches Feld mit aufeinander im wesentlichen senkrecht stehenden Feldlinien erzeugt werden, derart, daß auf in dem Umgebungswasser befindliche Ladungsträger eine Kraft ausgeübt und diese Kraft als Antriebskraft für das Wasserfahrzeug genutzt wird, wobei in dem rohrförmigen Bereich ein radial gerichtetes elektrisches Feld sowie ein darauf senkrecht stehendes magnetisches Feld erzeugt werden.

Die Erfindung betrifft ferner eine Vorrichtung zum Antreiben von Wasserfahrzeugen, bei der ein von Umgebungswasser durchströmter rohrformiger Bereich mit einer Magnetspule versehen und in dem rohrförmigen Bereich zwei mit einer Spannungsquelle verbundene Elektroden angeordnet sind, derart von einer Magnetspule umgeben und in dem Rohr mindestens eine mit einer Spannungsquelle verbundene Elektrode angeordnet ist, derart, daß auf in dem Umgebungswasser befindliche Ladungsträger eine Kraft ausgeübt und diese Kraft als Antriebskraft für das Wasserfahrzeug genutzt wird.

Ein Verfahren und eine Vorrichtung der vorstehend genannten Art sind aus der GB-Z "Maritime Defense, The Journal of International Naval Technology", 12/1988, Seite 445, bekannt.

Es ist bei sogenannten magnetohydrodynamischen Antrieben bekannt, einem Medium, das bewegliche Ladungsträger enthält, sowohl ein elektrisches wie auch ein magnetisches Feld aufzuprägen. Infolge des einwirkenden elektrischen Feldes geraten die Ladungsträger in Bewegung, und es wird dann infolge der Bewegung der Ladungsträger im magnetischen Feld auf die Ladungsträger die sogenannte Lorentz-Kraft ausgeübt, die sich aus dem Kreuzprodukt der Vektoren des magnetischen Feldes und der Geschwindigkeit in bekannter Weise ergibt.

Es ist auch, wie vorstehend erwähnt, bei Wasserfahrzeugen bekannt, derartige magnetohydrodynamische Antriebe zu verwenden. Bei der eingangs genannten bekannten Anordnung ist das Rohr von zwei symmetrisch zur Rohrachse angeordneten supraleitenden Sattelspulen umgeben. Die Sattelspulen erzeugen damit ein magnetisches Feld, dessen Richtung senkrecht zur Rohrachse verläuft. Im Rohr sind zwei kondensatorartige Plattenelektroden in axialer Richtung angeordnet, so daß das von diesen Plattenelektroden erzeugte magnetische Feld ebenfalls senkrecht zur Achsrichtung, aber auch senkrecht zur Richtung des magnetischen Feldes verläuft. Dies hat zur Folge, daß den im Rohr befindlichen freien Ladungsträgern des Umgebungswassers, nämlich den Ionen des Salzwassers, eine Lorentz-Kraft mitgeteilt wird, die in Axialrichtung des Rohres verläuft. Die bekannte Anordnung erzeugt somit eine Rückstoßkraft, die von den im Rohr axial bewegten Ladungsträgern herrührt. Bei der bekannten Vorrichtung zum Antreiben eines Wasserfahrzeuges wird mit den Sattelspulen eine Magnetfeldstärke von 2 T mit einem Strom von 2000 A erzeugt, was zu einer Rückstoßkraft von 8 kN führen soll.

Die physikalischen Grundlagen zum Verständnis derartiger magnetohydrodynamischer Antriebe sind in dem Lehrbuch von Becker/Sauter "Theorie der Elektrizität", 19. Auflage, 1969, Band 1, Seiten 255 bis 266, sowie im Lehrbuch von Pohl "Einführung in die Physik", 20. Auflage, 1967, Band 2, "Elektrizitätslehre", Seiten 98 bis 104, beschrieben.

Bei dem bekannten Verfahren und der bekannten Vorrichtung ist von Vorteil, daß die Antriebseinheit keinerlei beweglichen Elemente benötigt und daher praktisch keine Antriebsgeräusche auftreten. Aufgrund dessen eignen sich derartige Anordnungen auch für militärische Zwecke, insbesondere zum Antreiben von Unterseebooten.

Allerdings ist bei dem bekannten Verfahren und der bekannten Vorrichtung von Nachteil, daß der Wirkungsgrad verhältnismäßig niedrig und der Spulenaufbau verhältnismäßig kompliziert ist. Außerdem ist bei der bekannten Anordnung von Nachteil, daß infolge der verwendeten Sattelspulen ein sehr hohes Streufeld auftritt, so daß Fahrzeuge, die mit der bekannten Antriebsvorrichtung ausgestattet sind, durch magnetische Detektionsmethoden leicht geortet werden können. Außerdem können an Bord des Wasserfahrzeuges befindliche Gerätschaften, insbesondere elektronische Geräte, vom Streufeld der Magnetspule gestört werden. Die mechanische Belastung der Sattelspulen im Betrieb durch die magnetischen Kräfte auf den stromdurchflossenen Leiter führen zu Zugspannungen aber insbesondere, im Gegensatz zu einer Solenoidspule, auch zu Biegebeanspruchung des Leiters. Wenn in dieser Hinsicht die Grenzen des verwendeten Leitermaterials erreicht sind, kann dies durchaus effektiv die maximal einsetzbaren Ströme, und damit die erreichbaren Magnetfeldstärken begrenzen.

In der prioritätsälteren, jedoch nicht vorveröffentlichten europäischen Patentanmeldung 90 906 907.2 vom 23.05.1990 desselben Anmelders wird in einem Rohr ein axial gerichtetes Magnetfeld sowie ein zwischen der Achse des Rohrs und dem Rohr radial gerichtetes elektrisches Feld erzeugt, und im Rohr ist ein starres, schraubenformiges Element angebracht. Das im Rohr um die Achse umlaufende Umgebungswasser wird dadurch in eine axiale Richtung umgelenkt. Die Magnetspule ist dabei als Solenoidspule ausgebildet und im wesentlichen koaxial zum Rohr angeordnet. Die Elektrode ist im wesentlichen in der Rohrachse angeordnet und steht in Wechselwirkung mit dem als Gegenelektrode dienenden Rohrmantel.

Auf diese Weise kann ein größerer Wirkungsgrad erzielt werden, da das nutzbare Magnetfeldvolumen einer Solenoidspule viel größer als das einer Sattelspule ist. Aus dem gleichen Grunde ist auch das magnetische Streufeld geringer. Mechanische Begrenzung bei dieser bekannten Anordnung ist die zulässige Zugbelastung des Leitermaterials, so daß ggf. zusätzliche Verstärkungsmaßnahmen wie Verwendung konfektionierter Leiter oder Bandagierung der Wicklungen erforderlich sind.

Auch bei der vorbeschriebenen Anordnung liegen keinerlei bewegte Antriebselemente vor. Allerdings ist der Strömungsweg nicht mehr linear und der durch die starren Ablenkelemente umgelenkte Wasserstrom führt zu Wirbeln, die bei bestimmten Geschwindigkeiten charakteristische Frequenzkomponenten enthalten können.

Der Offenbarungsgehalt der vorgenannten europäischen Patentanmeldung 90 906 907.2 wird durch diese Bezugsnahme auch zum Offenbarungsgehalt der vorliegenden Anmeldung gemacht.

Der Erfindung liegt demgegenüber die Aufgabe zugrunde, ein Verfahren und eine Vorrichtung der eingangs genannten Art dahingehend weiterzubilden, daß bei erhöhtem Wirkungsgrad das auftretende Streufeld nahezu vollkommen abgeschirmt wird und daß zur Vermeidung von Geräuschentwicklungen das strömende Umgebungswasser nicht nennenswert aus der Fahrtrichtung heraus abgelenkt wird.

Diese Aufgabe wird nach dem eingangs genannten Verfahren dadurch gelöst, daß das Magnetfeld mit um die Achse des rohrförmigen Bereichs geschlossen umlaufenden Feldlinien erzeugt wird.

Gemäß der eingangs genannten Vorrichtung wird die Erfindung zugrundeliegende Aufgabe dadurch gelöst, daß die Magnetspule als Toroidspule ausgebildet und im wesentlichen koaxial zum Rohr angeordnet ist, und daß die Elektroden in dem von Windungen der Magnetspule umgebenden Raum angeordnet sind.

Die der Erfindung zugrundeliegende Aufgabe wird auf diese Weise vollkommen gelöst.

Bei einer Toroidspule erzeugen die achsnahen Leiter um sich herum ein Magnetfeld, dessen Feldlinien kreisförmig um die Achse verlaufen. Wird nun zusätzlich ein radial gerichtetes elektrisches Feld erzeugt, so stehen das elektrische Feld und das Magnetfeld senkrecht aufeinander. Damit wird auf bewegliche Ladungsträger im Umgebungswasser eine Kraft ausgeübt, die axial gerichtet ist. Das Umgebungswasser wird also in Achsrichtung beschleunigt. Im Idealfall gibt es keine radialen Komponenten der Beschleunigung. Damit ist der Antrieb extrem geräuscharm und das Magnetfeld ist auch nach außen ideal abgeschirmt, weil eine Toroidspule durch die im Inneren der Spule geschlossenen magnetischen Feldlinien im Idealfall kein Außenfeld hat. In jedem Fall verschwindet das magnetische Dipolmoment.

Insgesamt ist es daher mit der Erfindung möglich, Antriebseinheiten zu schaffen, die einen wesentlich einfacheren und kompakteren Aufbau haben und bei denen die eingesetzte Energie in weit günstigerem Maße in Antriebsleistung für das Wasserfahrzeug umgesetzt wird.

Aus diesem Grunde eignen sich das erfindungsgemäße Verfahren sowie die erfindungsgemäße Vorrichtung in besonderem Maße zum Antreiben von Unterseebooten, sei es, indem ein Vorschub für eine Marsch- oder Schleichfahrt erzeugt wird, sei es, daß eine Antriebsleistung zum Manövrieren in Tiefenrichtung erzeugt wird.

Bei einer besonders bevorzugten Ausgestaltung des erfindungsgemäßen Verfahrens wird das elektrische Feld mit Feldlinien erzeugt, deren Richtung im wesentlichen die Achse schneidet.

Diese Maßnahme hat den Vorteil, daß das elektrische Feld praktisch im gesamten Innenraum innerhalb der Windungen der Toroidspule senkrecht auf dem Magnetfeld steht, so daß die bewegten Ladungsträger des Umgebungswassers an allen Stellen des Innenraumes eine rein axiale Beschleunigung erfahren.

Bei einer bevorzugten Ausgestaltung der erfindungsgemäßen Vorrichtung ist der von den Windungen der Toroidspule umgebene Raum im Axialschnitt im wesentlichen rechteckförmig.

Diese Maßnahme hat den Vorteil, daß eine relativ einfache Form entsteht, bei der auch die Elektroden in entsprechend einfacher Weise gestaltet werden können.

Bei einer anderen Variante der erfindungsgemäßen Vorrichtung ist jedoch der von den Windungen der Toroidspule umgebene Raum im Axialschnitt im wesentlichen D-förmig.

Diese Maßnahme hat den Vorteil, daß die bei großen Toroidspulen mit hoher Feldstärke auftretenden Biegemomente vermindert werden können, indem die D-Form des Axialschnittes im Hinblick auf die auftretenden Biegebelastungen optimiert wird.

Bei Ausführungsbeispielen der Erfindung verlaufen die achsnahen Leiter der Toroidspule als dichtes Leiterbündel in der Achse.

Diese Maßnahme hat den Vorteil, daß ein kompakter Aufbau erzielt wird, weil im Rahmen der vorliegenden Erfindung im wesentlichen der von den Windungen der Toroidspule umschlossene Raum genutzt wird, so daß ein zwischen den achsnahen Leitern verbleibender axialer Raum umgenutzt bleiben müßte.

Bei weiteren Ausführungsbeispielen der Erfindung sind die achsfernen Leiter der Toroidspule über ein im wesentlichen hohlzylindrisches und koaxial zur Achse angeordnetes Volumen verteilt angeordnet und bilden einen im wesentlichen geschlossenen Mantel.

Diese Maßnahme hat den Vorteil, daß die Abschirmung der Toroidspule perfekt ist, weil das Magnetfeld nicht durch den geschlossenen Mantel dringt.

Bei anderen Ausführungsbeispielen der Erfindung sind jedoch die achsfernen Leiter der Toroidspule zu mindestens zwei Leiterbündeln zusammengefaßt, die drehsymmetrisch über ein hohlzylindrisches und koaxial zur Achse angeordnetes Volumen verteilt angeordnet sind.

Diese Maßnahme hat den Vorteil, daß der Aufbau und Zusammenbau der Toroidspule vereinfacht wird, weil die Toroidspule aus mehreren radial gerichteten und über einen Umfang verteilten Spulenscheiben zusammengesetzt werden kann. Im einfachsten Fall ist es sogar möglich, eine Toroidspule durch zwei Rechteckspulen zu erzeugen, die mit ihren inneren Längsleitern in der Achse aneinander liegen und um 180° gegeneinander versetzt angeordnet sind. In diesem Falle ist das Spulenvolumen extrem klein und kann daher auf besonders einfache Weise von weiteren Einheiten umgeben werden, beispielsweise von einem Kryostaten, wie er für ein supraleitendes Magnetsystem Verwendung findet.

Bei Ausführungsbeispielen der Erfindung sind die achsnahen Leiter mit den achsfernen Leitern über radial verlaufende Leiterbündel verbunden.

Diese Maßnahme hat den Vorteil, daß genügend Freiraum an den Stirnseiten der Toroidspule verbleibt, um einen Durchschnittsquerschnitt für das durchströmende Umgebungswasser zur Verfügung zu stellen. Auch hat die Konzentrierung auf radial verlaufende Leiterbündel den Vorteil, daß die Leiterbündel mit hydrodynamisch günstigen Profilen verkleidet werden können, um den Strömungswiderstand der Spule herabzusetzen. Die radial verlaufenden Leiterbündel sind dabei vorzugsweise drehsymmetrisch zur Achse angeordnet, vorzugsweise sind zwei, drei oder vier derartige Leiterbündel um 180° bzw. 120° bzw. 90° zueinander versetzt angeordnet.

Bei besonders bevorzugten Ausführungsbeispielen der Erfindung sind die Windungen der Toroidspule mindestens teilweise in Reihe geschaltet. Es ist jedoch auch möglich, die radial verlaufenden Leiterbündel getrennt mit Strom zu versorgen, je nachdem, wie dies im Einzelfall zweckmäßig ist.

Bei weiteren Ausführungsbeispielen der Erfindung sind die Elektroden als zylindrische Rohre ausgebildet, die mit radialem Zwischenraum koaxial zur Achse angeordnet sind.

Diese Maßnahme hat den Vorteil, daß ein rotationssymmetrisches elektrisches Feld im Innenraum der Spule erzeugt werden kann, so daß auch die Kraftmitteilung auf die beweglichen Ladungsträger rotationssymmetrisch ist. Weiterhin hat die Verwendung zylindrischer Rohr den Vorteil, daß auch eine gute Führung des Umgebungswassers möglich ist, weil zylindrische Rohre einen besonders niedrigen hydrodynamischen Widerstand haben. Es versteht sich dabei jedoch, daß statt zylindrischer Vollrohre auch Segmente von zylindrischen Rohren verwendet werden können, ohne daß dies den Rahmen der vorliegenden Erfindung verläßt.

Bei einer weiteren bevorzugten Ausgestaltung der erfindungsgemäßen Vorrichtung ist die Spannungsquelle in ihrer Ausgangsspannung und Polarität einstellbar.

Diese Maßnahme hat den Vorteil, daß die Vorschubkraft und - richtung beliebig einstellbar sind, so daß das Wasserfahrzeug in äußerst einfacher Weise in seiner Fahrtgeschwindigkeit und -richtung eingestellt werden kann.

Wie auch beim Stand der Technik ist es bei der Erfindung besonders bevorzugt, wenn eine supraleitende Spule als Magnetspule eingesetzt wird, weil infolge der natürlichen Ionenkonzentration im Salzwasser hohe Feldstärken erforderlich sind, um die zum Antrieb eines realen Wasserfahrzeuges erforderlichen Vorschubkräfte zu erzeugen.

Hierbei ist besonders bevorzugt, wenn die Spule aus einem Hochtemperatur-Supraleiter besteht.

Diese Maßnahme hat den Vorteil, daß je nach Sprungtemperatur des Supraleiters nur verhältnismäßig einfache Kühleinrichtungen oder sogar überhaupt keine Kühleinrichtungen erforderlich sind, wenn ein supraleitendes Material zum Wickeln der Spule eingesetzt wird, das bereits bei der Umgebungstemperatur des Wasserfahrzeuges im supraleitenden Zustand ist. Besonders bevorzugt ist, daß die Spulen im supraleitenden Kurzschluß betrieben werden, wodurch für die Magnetfelderzeugung keine gesonderte Leistung aufgebracht werden muß.

Vorzugsweise werden die Leiter der achsnahen Leiterbündel so angeordnet, daß auf ihrer Oberfläche die kritische Feldstärke des Supraleitermaterials keinesfalls überschritten wird, was die zulässige mittlere Stromdichte des Leiterbündels und damit seinen minimalen Radius festlegt.

Bei supraleitenden Spulen müssen die Leiterbündel vollständig von Kryostrukturen umgeben sind. Dies gilt auch für die radialen Leiterabschnitte an den Stirnseiten der Spule. So kann bei Ausführungsformen der Erfindung ein rohrförmiger Kryostat verwendet werden, der ein inneres Rohr für die achsnahen Leiter als "Nabe" und an den Stirnseiten der Spule radiale "Speichen" für die radialen Leiterbündel und schließlich einen "Mantel" für die achsfernen Leiter enthält.

Bei einer bevorzugten Ausführungsform der Erfindung werden die "Speichen" ebenfalls von mindestens einem Elektrodenpaar umgeben, wodurch durch Anlegen einer vorzugsweise umpolbaren Spannung eine Kraft auf die Ladungsträger des Umgebungswassers ausgeübt wird, die näherungsweise parallel zur Richtung der "Speiche" ist.

Damit ist eine zusätzliche seitliche und/oder vertikale Mannövrierfähigkeit gegeben, die besonders für Unterseeboote vorteilhaft ist. Auch die Neigung des Bootes kann beeinflußt werden. Das Elektrodenpaar muß die "Speiche" nicht notwendigerweise vollkommen umschließen, sondern ihre exakte Geometrie wird von strömungstechnischen Erfordernissen mit geprägt.

Wie bereits erläutert, können in diesem Falle die "Speichen" sich auch anstelle des "Mantels" über die gesamte axiale Länge zur Aufnahme der achsfernen Leiter fortsetzen oder auf den Bereich der Stirnseiten der Spule beschränkt sein. Die Elektroden zur Erzeugung des elektrischen Feldes können direkt auf der "Nabe" bzw. der Innenseite des "Mantels" aufliegen oder diese bilden. Zwischen den "Speichen" strömt dann das Umgebungswasser in axialer Richtung, wobei der Querschnitt des Strömungskanals hydrodynamisch geformt werden kann, um das Strömungsverhalten und den Wirkungsgrad zu optimieren. Es können aber auch mehrere unabhängige Kryostaten verwendet werden, um jeweils Spulenbündel, bestehend aus Teilmengen der achsnahen Leiter, der achsfernen Leiter und der radialen Leiter, separat in Einzelkryostaten unterzubringen.

Nach der Erfindung sind zahlreiche Varianten denkbar, um erfindungsgemäße Vorrichtungen in oder an einem Rumpf eines Überwasser- oder Unterwasserfahrzeuges anzuordnen.

So ist bei einer ersten Variante vorgesehen, die Antriebseinheit in einen Schiffsrumpf zu integrieren, während alternativ auch möglich ist, die Antriebseinheit an einem Ausleger im Abstand von einem Schiffsrumpf anzuordnen oder diese in einem Kiel eines Schiffsrumpfes zu integrieren, je nachdem, wie dies im Einzelfall, auch unter Berücksichtigung des geplanten Einsatzes des Wasserfahrzeuges, sinnvoll ist.

Wenn die Antriebseinheit nach einer weiteren Ausbildung der Erfindung zur Fahrtrichtung eines Schiffsrumpfes geneigt, vorzugsweise schwenkbar, angeordnet ist, kann bei einem Unterwasserfahrzeug ein Manöver zur Erhöhung oder Verminderung der Tauchtiefe gefahren werden, während bei einem Überwasserfahrzeug durch Anheben (Levitation) des Schiffsrumpfes der hydrodynamische Widerstand vermindert werden kann, wie man dies auch von Tragflügelbooten her kennt.

Besonders bevorzugt ist, wenn zwei aus Toroidspule und Rohr gebildete Antriebseinheiten parallel nebeneinander auf einem gemeinsamen Gestell angeordnet sind. Bei einer solchen TandemAnordnung können die Antriebseinheiten in unterschiedlicher Weise eingestellt werden, beispielsweise dadurch, daß man die Spannungsamplitude und/oder Polarität unterschiedlich einstellt. Auf diese Weise ist dann ein Mannövrieren möglich, wenn sich die Antriebskräfte der beiden einzelnen Antriebseinheiten nach Betrag und/oder Richtung unterscheiden.

Bei weiteren bevorzugten Ausgestaltungen der Erfindung ist an das Rohr eine Ionisiereinheit angeschlossen, beispielsweise wird dem Umgebungswasser eine dessen Leitfähigkeit erhöhende Substanz zugegeben.

Diese Maßnahme hat den Vorteil, daß durch Erhöhung der Ionenkonzentration auch die Antriebskraft erhöht wird. Es versteht sich dabei, daß die Ionisiereinheit in diesem Fall auch kurzzeitig eingesetzt werden kann, um im Beispielsfalle eines militärisch genutzten Wasserfahrzeuges für kurzzeitige Angriffs- oder Absetzfahrten die Antriebskraft zu erhöhen.

Weiterhin sind noch Ausführungsbeispiele der Erfindung bevorzugt, bei denen die Auf die Ladungsträger ausgeübte Kraft in Abhängigkeit vom radialen Abstand von der Elektrode einstellbar ist, beispielsweise indem der Verlauf der elektrischen Feldstärke in Abhängigkeit vom radialen Abstand von der Elektrode variiert wird.

Diese Maßnahme hat den Vorteil, daß der natürlichen Abhängigkeit der Feldstärke vom Radius bei der erfindungsgemäßen Zylinderkondensatoranordnung entgegengewirkt wird, damit Turbulenzen und Kavitationen infolge unterschiedlich wirkender Lorentz-Kräfte vermieden werden.

Bei einer weiteren, besonders bevorzugten Gruppe von Ausführungsbeispielen der Erfindung hat das Rohr einen sich in Strömungsrichtung des Wassers vergrößernden Querschnitt.

Diese Maßnahme hat den Vorteil, daß bei konstantem Durchsatz die Strömungsgeschwindigkeit am Ausgang des Rohres niedrig eingestellt werden kann, so daß auf diese Weise Turbulenzen am Austritt des Rohres ebenfalls weitgehend vermieden werden können.

Besonders bevorzugt ist bei diesem Ausführungsbeispiel, wenn das Rohr mit seitlichen Ansaugöffnungen versehen ist.

Diese Maßnahme hat nämlich den Vorteil, daß die den Wassermolekülen über die axiale Länge des Rohres mitgeteilte Kraft bzw. Beschleunigung sich auch auf "frisches" Wasser verteilt, so daß ein besonders gleichmäßiger Verlauf der Krafteinwirkung auf die Wassermoleküle über der Achse erreicht wird.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Fig. 1: eine perspektivische Darstellung einer magnetohydrodynamischen Antriebseinheit für Wasserfahrzeuge nach dem Stande der Technik;
- Fig. 2: eine schematisierte Darstellung zur Erläuterung der bei der Anordnung gemäß Fig. 1 wirkenden Lorentz-Kräfte;
- Fig. 3a: eine äußerst schematisierte perspektivische Ansicht einer Toroidspule;
- Fig. 3b: ein Axialschnitt durch die in Fig. 3a dargestellte Toroidspule;
- Fig. 3c: eine Darstellung, ähnlich Fig. 3b, jedoch für eine anders konfigurierte Toroidspule;
- Fig. 4: eine perspektivische Ansicht eines ersten Ausführungsbeispiels einer erfindungsgemäßen Antriebseinheit;
- Fig. 5: eine perspektivische Ansicht eines zweiten Ausführungsbeispiels einer erfindungsgemäßen Antriebseinheit;
- Fig. 6 bis 10: schematisierte Darstellungen zur Erläuterung von Möglichkeiten der Anbringung erfindungsgemäßer Antriebseinheiten an bzw. in Schiffsrümpfen;

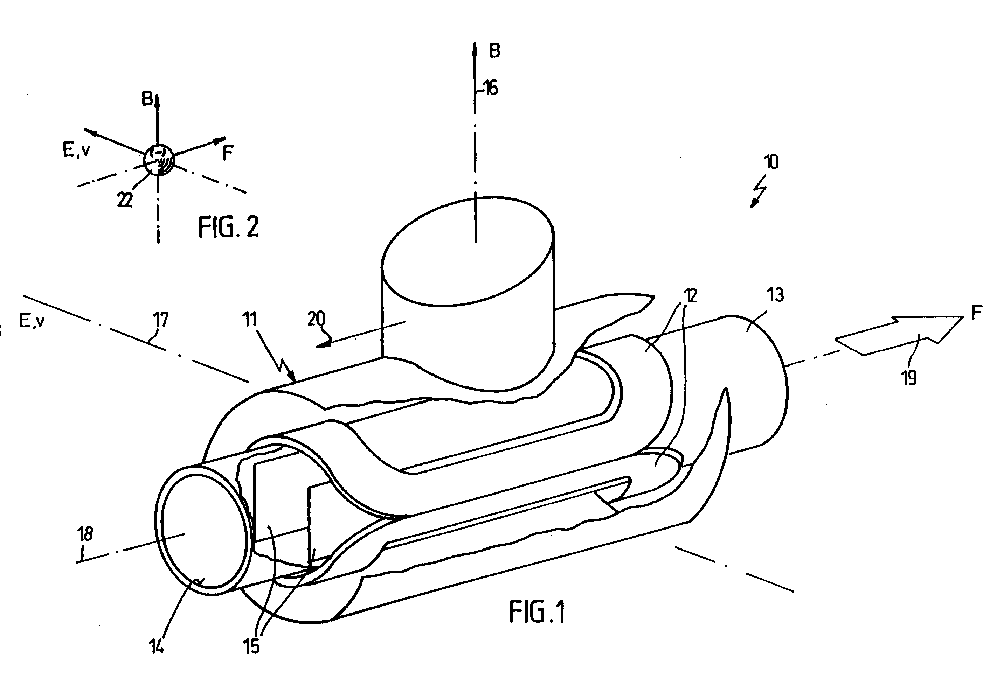

In Fig. 1 bezeichnet 10 insgesamt eine magnetohydrodynamische Antriebseinheit für ein Wasserfahrzeug nach dem Stande der Technik.

Die Antriebseinheit 10 umfaßt einen Kryostaten, in dem ein Paar supraleitender Sattelspulen 12 angeordnet ist. Die Sattelspulen 12 sind beidseits eines Rohres 13 angeordnet, dessen Durchgangsöffnung 14 sich auf Raumtemperatur befindet und von Umgebungswasser, nämlich Meeres-Salzwasser, durchströmt wird.

In der Durchgangsöffnung 14 befinden sich zwei Plattenelektroden 15, die sich in axialer Richtung des Rohres 13 erstrecken und einen bestimmten Abstand voneinander aufweisen. Die Plattenelektroden 15 sind an eine in Fig. 1 nicht dargestellte Spannungsquelle angeschlossen.

Wenn die Sattelspulen 12 erregt sind, erzeugen sie ein Magnetfeld B, dessen Richtung in Fig. 1 mit einer Achse 16 bezeichnet ist. Die Elektroden 15 erzeugen demgegenüber ein elektrisches Feld E, dessen Achse in Fig. 1 mit 17 bezeichnet ist und auf der Achse 16 des magnetischen Feldes B senkrecht steht. Beide Achsen 16, 17 stehen ihrerseits senkrecht auf einer Achse 18 des Rohres 13.

Betrachtet man nun Fig. 2, so erkennt man den in Fig. 1 wirksamen Mechanismus wie folgt:

Das Umgebungswasser, nämlich das Meeres-Salzwasser, enthält Ladungsträger 22, nämlich die Ionen des Salzwassers. Die Ladungsträger 22 sind im Wasser auch beweglich, so daß bei Einwirkung eines elektrischen Feldes E die Ladungsträger 22 in Bewegung geraten, weil das elektrische Feld E auf die Ladungsträger 22 eine in Richtung des elektrischen Feldes E gerichtete Kraft ausübt. Die Ladungsträger 22 nehmen damit eine Geschwindigkeit v ein, deren Vektor in Richtung der elektrischen Feldstärke E gerichtet ist.

Da anderseits auf die Ladungsträger 22 ein Magnetfeld B wirkt, das senkrecht zum elektrischen Feld E gerichtet ist, wird auf die Ladungsträger 22 ferner die sogenannte Lorentz-Kraft F ausgeübt, die dem Kreuzprodukt der Vektoren der Geschwindigkeit v und des magnetischen Feldes B entspricht und damit wiederum senkrecht zu den beiden vorstehend genannten Größen gerichtet ist. Dies bedeutet, daß die Lorentz-Kraft F in Richtung der Achse 18 des Rohres 13 liegt. Infolge der Vielzahl von Ladungsträgern 22 im Salzwasser ergibt sich damit ein Rückstoß auf die Antriebseinheit 10, wie mit einem Pfeil 19 in Fig. 1 angedeutet. Da die Antriebseinheit 10 ihrerseits frei beweglich ist, nimmt sie Fahrt auf, und zwar in einer mit einem Pfeil 20 in Fig. 1 bezeichneten Fahrtrichtung, die entgegengesetzt zum Rückstoß 19 in der Achse 18 des Rohres 13 liegt.

Bei der bekannten Einrichtung der Fig. 1 ist es erforderlich ein Paar der Sattelspulen 12 beidseitig auf dem Rohr 13 anzubringen, wozu eine verhältnismäßig komplizierte Formgebung der Spulen 12 und eine ebenso aufwendige Halterung dieser Spulen 12 am Rohr 13 erforderlich ist. Außerdem wird aus der Darstellung der Fig. 1 offensichtlich, daß die Anordnung der Spulen 12 ein sehr großes Streufeld zur Folge hat, weil die Spulen 12 ein sehr großes Fenster freilassen und sich die Feldlinien daher in hohem Maße weit außerhalb der Antriebseinheit 10 schließen. Schließlich bedarf die Antriebseinheit 10 eines verhältnismäßig großen Kryostaten 11, um darin die Sattelspulen 12 mit dem umgebenen Rohr 13 unterzubringen. Die auf eine stromdurchflossene Sattelspule 12 wirkenden Biegemomente begrenzen zudem den maximal zulässigen Strom, insbesondere bei supraleitenden Magnetspulen.

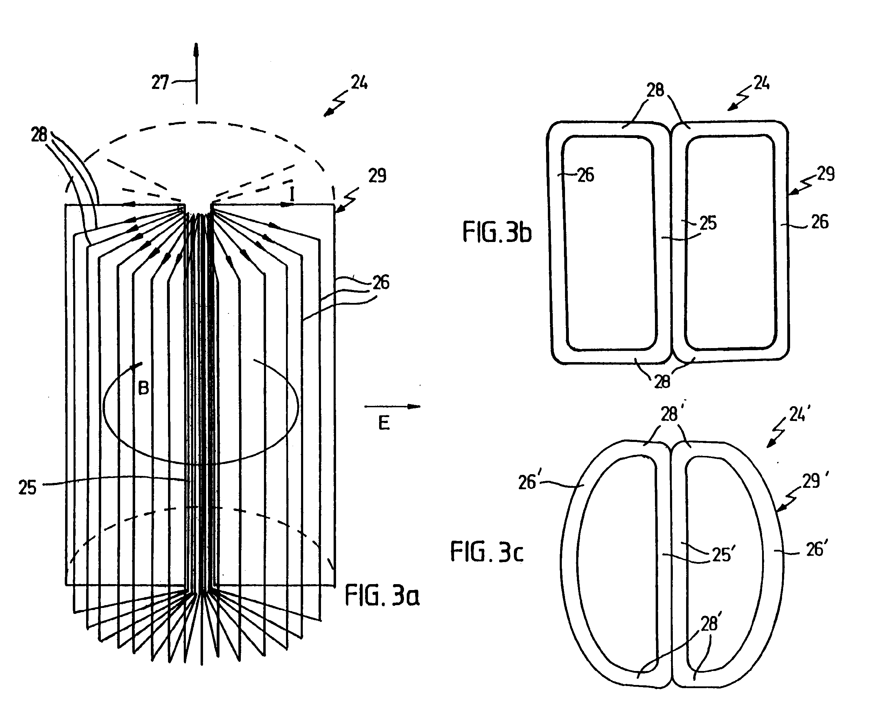

In Fig. 3a ist 24 insgesamt eine Toroidspule herkömmlicher Art, die achsnahe Leiter 25 und achsferne Leiter 26, jeweils bezogen auf eine zentrale Achse 27 aufweist. Die achsnahen und achsfernen Leiter 25, 26 sind jeweils über radiale Leiter 28 miteinander verbunden. Auf diese Weise werden Windungen 29 gebildet. Wird die Toroidspule 24 nun von einem Strom I durchflossen, so bildet sich ein Magnetfeld B aus, dessen Feldlinien geschlossen um die achsnahen Leiter 25 und damit die Achse 27 verlaufen. Ein Streufeld, d.h. ein in den Außenraum austretendes Magnetfeld, gibt es damit im Idealfall nicht.

Wird nun in radialer Richtung ein elektrisches Feld E erzeugt, so wird den beweglichen Ladungsträgern im Umgebungswasser eine Kraft mitgeteilt, die in Richtung der Achse 27 weist.

Fig. 3 b zeigt nochmals die Toroidspule 29, jedoch im Axialschnitt und mit gebündelten Windungen 29. Man erkennt, daß die Windungen 29 im Axialschnitt eine im wesentlichen rechteckförmige Gestalt aufweisen.

Demgegenüber zeigt Fig. 3c in einer Variante eine Solenoidspule 24', bei der die achsnahen Leiter 25', die achsfernen Leiter 26' und die radialen Leiter 28' in im Axialschnitt D-förmigen Windungen 29' verlaufen.

Diese D-Gestalt der Windungen 29' hat folgenden Sinn:

Bei großen Toroidspulen treten ebenso wie bei großen Sattelspulen Biegebeanspruchungen auf. Die exakte Form einer Toroidspule läßt sich nun numerisch so berechnen, daß die Biegebeanspruchungen gering sind und im Idealfall sogar wie beim idealen langen Solenoid verschwinden. Ein Berechnungsverfahren hierzu findet sich z.B. in dem Buch von Wilson, M.N., "Superconducting Magnets", Clarendon Press, 1983, Seiten 53 bis 55 sowie in einem Beitrag von Komarek, P. in einem Tagungsbericht "Seminar Supraleitungstechnik" vom 13./14.5.1985 in der "Schule für Kerntechnik", Kernforschungszentrum Karlsruhe, Seiten 180 ff., insbesondere Seiten 199 bis 209.

Die in den genannten Literaturstellen angegebenen Verfahren lassen sich unter entsprechender Anpassung auch auf die Toroidspulen der vorliegenden Erfindung übertragen. Dabei muß die gesamte Biegebelastung nicht exakt zu Null gemacht werden, es ist vielmehr ausreichend, wenn sich die Biegebelastung innerhalb zulässiger Grenzen bewegt, wie sie für das Leitermaterial der Spulen vorgegeben sind. Ausgehend von diesen idealisierten Lösungen können für reale Spulen unter Berücksichtigung des endlichen Leiterquerschnitts und der tatsächlichen exakten Verteilung des Magnetfeldes wiederum numerisch iterativ weitgehend biegespannungsfreie Anordnungen gefunden werden.

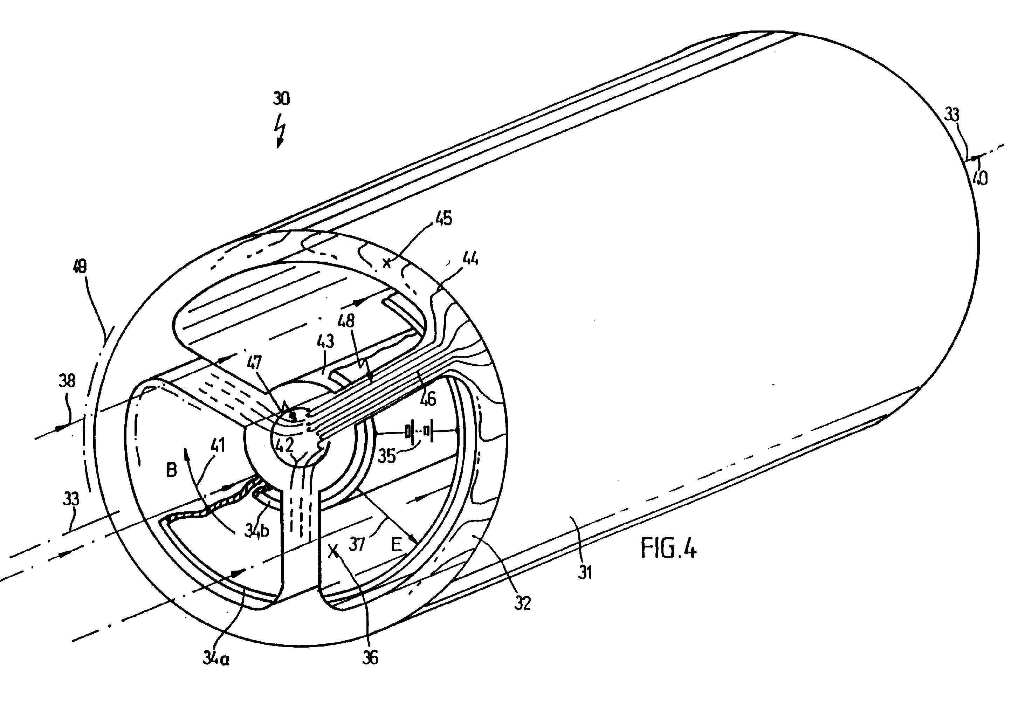

Fig. 4 zeigt ein erstes Ausführungsbeispiel einer erfindungsgemäßen Antriebseinheit 30, die im wesentlichen die Gestalt eines zylindrischen Rohrs 31 hat.

Eine Toroidspule 32 ist um eine Achse 33 herum angeordnet. Elektroden 34a und 34b haben die Gestalt von Hohlzylindern und sind an eine Spannungsquelle 35 angeschlossen. Die Elektroden 34a, 34b schließen zwischen sich einen rohrförmigen Bereich 36 ein, durch den das Umgebungswasser in Richtung der Achse 33 strömen kann.

Zwischen den koaxial angeordneten Elektroden 34a, 34b werden auf diese Weise radial gerichtete elektrische Feldlinien 37 erzeugt, deren Richtung sämtlich durch die Achse 33 verläuft.

Eine Strömungsrichtung 38 des Umgebungswassers stellt sich dann in der in Fig. 4 eingezeichneten Weise ein und führt auch zu einem mit einem Pfeil 40 angedeuteten Rückstoß, da Feldlinien 41 des magnetischen Feldes B kreisförmig um die Achse 33 herum verlaufen, wie weiter oben zu Fig. 3 erläutert.

Bei der Toroidspule 32 verlaufen achsnahe Leiter 42 vorzugsweise in einem zentralen Rohr 43 und achsferne Leiter 44 sind gleichmäßig über ein hohlzylindrisches Volumen 45 verteilt, wobei Rohr 43 und hohlzylindrisches Volumen 45 koaxial zur Achse 33 angeordnet sind. Die achsnahen Leiter 42 sind mit den achsfernen Leiter 44 über radiale Leiter 46 verbunden. Die achsnahen Leiter 42 sind in Leiterbundeln 47 und die radialen Leiter 46 sind in Leiterbündeln 48 zusammengefaßt.

Die radialen Leiterbündel 48 bilden somit "Speichen" einer im Radialschnitt radartigen Struktur.

Bei Varianten der Antriebseinheit 30 kann das Rohr 43 direkt von der inneren Elektrode 34b gebildet werden, ebenso wie das hohlzylindrische Volumen 45 radial innen von der äußeren Elektrode 34a begrenzt sein kann.

Es versteht sich ferner, daß die radialen Leiterbündel 48 in die "Speichen" in hydrodynamisch günstiger Form gestaltet sind, um dem in Strömungsrichtung 38 anströmenden Umgebungswasser einen möglichst geringen Strömungswiderstand entgegenzusetzen. All dies ist im Rahmen fachmännischen Handelns realisierbar und daher der Übersichtlichkeit halber in Fig. 4 nicht im einzelnen dargestellt.

Mit 49 ist in Fig. 4 angedeutet, daß die Toroidspule 32 eine supraleitende Spule sein kann, wozu es erforderlich ist, die Toroidspule 32 in eine Kryostruktur unterzubringen.

Es können auch die einzelnen Teilespulen die zu unterschiedlichen radialen Leiterbündeln 48 gehören, in separaten Kryostrukturen untergebracht werden, die dann starr verbunden sind.

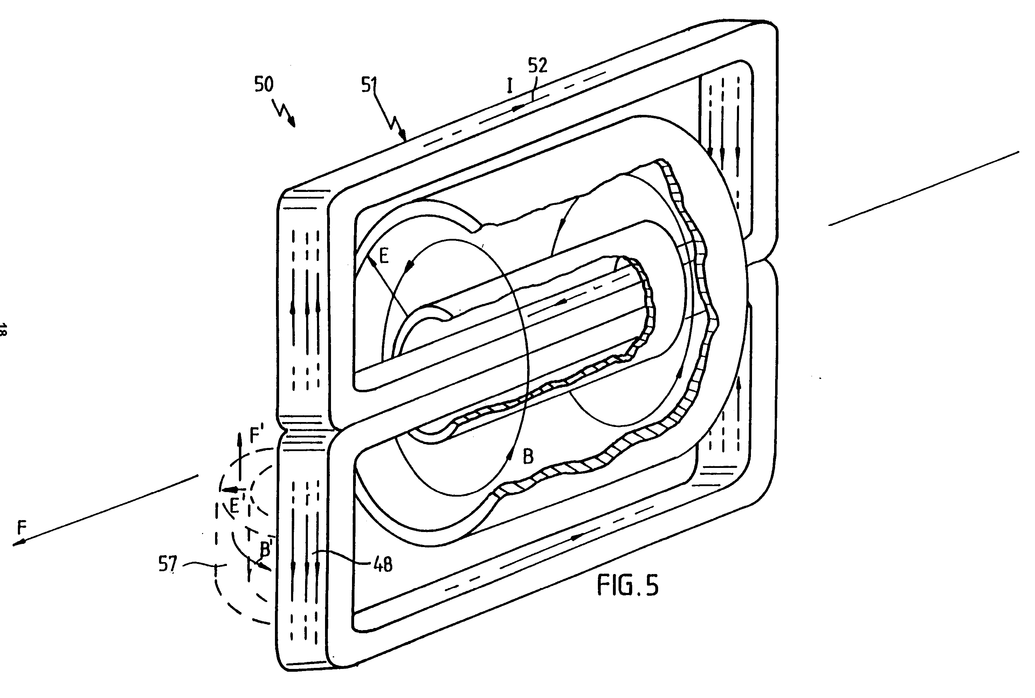

Fig. 5 zeigt eine Variante mit einer Antriebseinheit 50, bei der eine Toroidspule 51 aus zwei rechteckförmigen Spulen besteht, so daß die achsfernen Leiter 52 ebenfalls zu Bündeln zusammengefaßt sind.

Die Struktur der Elektroden kann im Ausführungsbeispiel der Fig. 5 derjenigen der Fig. 4 entsprechen.

Die Elektroden können aber auch auf endliche Winkelbereiche um die Leiterebene beschränkt sein.

Die radialen Leiterbündelabschnitte 48 können zusätzlich jeweils von einem weiteren Elektrodenpaar 57 teilweise oder ganz umgeben sein, wie in Fig. 5 dargestellt. Dadurch wird eine zusätzliche zum Hauptantrieb (F) im wesentlichen senkrecht stehende magnetohydrodynamische Antriebsmöglichkeit (F') geschaffen, was ein Mannövrieren in horizontaler und/oder vertikaler Richtung sowie ein Trimmen des Fahrzeuges, insbesondere bei U-Booten, ermöglicht. Die in Fig. 5 dargestellten Zusatzelektroden 57 können selbstverständlich auch bei allen anderen Ausführungsformen der Erfindung angebracht werden.

Im Unterschied zum Ausführungsbeispiel der Fig. 4 ist bei der Toroidspule 51 der Fig. 5 ein größeres Streufeld zu erwarten, weil die Feldlinien des magnetischen Feldes B in den Außenraum, d.h. den Raum außerhalb der Toroidspule 51 hineinreichen. Allerdings verschwindet auch für diese einfache Anordnung bereits das magnetische Dipolmomet.

Es ist ferner beim Ausführungsbeispiel der Fig. 5 möglich, die beiden einzelnen Rechteckspulen auch in getrennten Kryostaten unterzubringen, sofern eine supraleitende Spule verwendet wird.

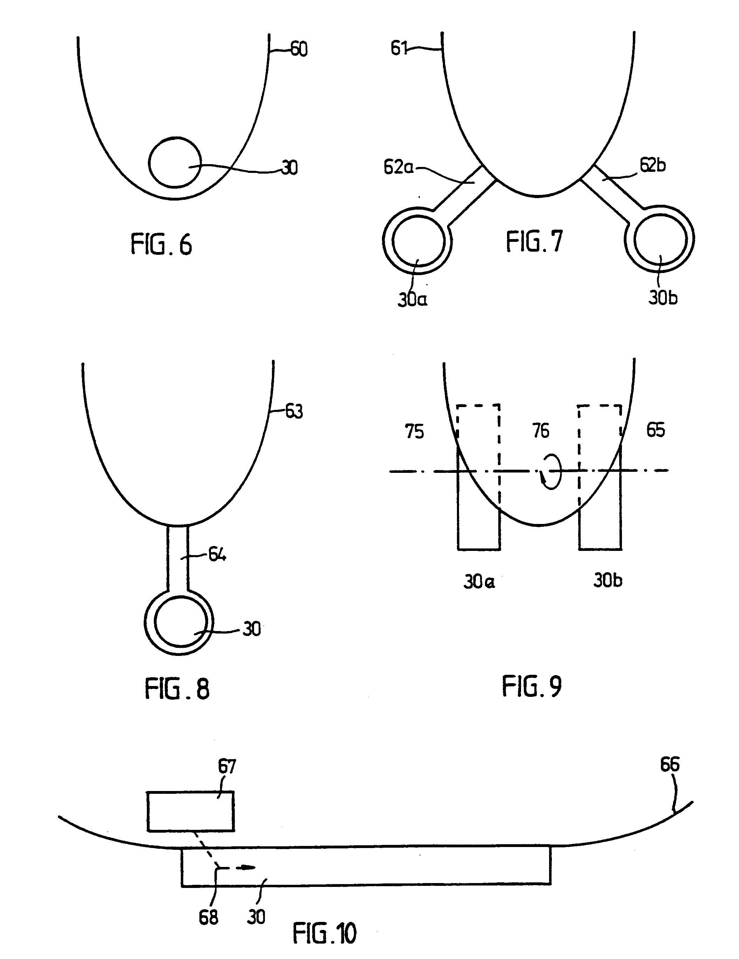

In den Fig. 6 bis 9 sind verschiedene Varianten dargestellt, wie einzelne Antriebseinheiten oder Tandem-Antriebseinheiten in Schiffsrümpfen von Über- oder Unterwasserfahrzeugen untergebracht werden können.

Bei der Variante gemäß Fig. 6 ist eine einzelne Antriebseinheit 30 der in Fig. 4 erläuterten Art in einen Schiffsrumpf 60 integriert, so daß ein minimaler Strömungswiderstand entsteht.

Bei der Variante gemäß Fig. 7 ist eine Tandem-Antriebseinheit 30a, 30b an Auslegern 62a, 62b im Abstand von einem Schiffsrumpf 61 angeordnet.

Bei der Variante gemäß Fig. 8 befindet sich wiederum eine einzelne Antriebseinheit 30 gemäß Fig. 4 am unteren Ende eines Kieles 64 eines Schiffsrumpfes 63.

Schließlich veranschaulicht Fig. 9 noch die Möglichkeit, eine Tandem-Antriebseinheit 30a, 30b in einem Schiffsrumpf 65 derart anzuordnen, daß die Richtung der Antriebseinheiten 30a, 30b nicht parallel zur Fahrtrichtung verläuft, sondern um eine zur Fahrtrichtung senkrechte Achse 75 geschwenkt werden kann, wie mit einem Pfeil 76 angedeutet. Bei Unterwasserfahrzeugen kann damit in Tiefenrichtung manövriert werden, während bei Überwasserfahrzeugen eine Levitation des Schiffsrumpfes erreicht werden kann mit dem Ziel, den hydrodynamischen Widerstand nach Art von Tragflügelbooten zu verringern.

Es versteht sich dabei, daß die Anordnungen der Fig. 6 bis 9 auch in Kombination miteinander oder in Vertauschung der einzelnen Elemente eingesetzt werden können, beispielsweise beim Fall der Fig. 8, indem am unteren Ende des Kiels 64 nicht eine einzelne Antriebseinheit 30, sondern vielmehr eine Tandem-Einheit 30a, 30b eingesetzt wird.

Fig. 10 zeigt einen weiteren Schiffsrumpf 66, an dessen Unterseite eine Antriebseinheit 30 nach Art der Fig. 4 angeordnet ist, wobei sich auch hier versteht, daß es sich um eine TandemEinheit handeln kann.

Am vorderen Ende der Antriebseinheit 30 befindet sich im Schiffsrumpf 66 eine Ionisiereinheit 67, die über eine Leitung 68 mit dem Innenraum des Rohres der Antriebseinheit 30 verbunden ist.

Die Ionisiereinheit 67 kann beispielsweise ein Vorratsbehälter und Dosierer für eine Substanz sein, mit der sich die Leitfähigkeit von Meerwasser erhöhen läßt, beispielsweise ein Salz- oder ein Salzlösungs-Tank.

Über die Leitung 68 kann von der Ionisiereinheit 67 im Kurzzeit- oder Dauerbetrieb die elektrische Leitfähigkeit, d.h. die Ionenkonzentration, im Umgebungswasser erhöht werden, das das Rohr der Antriebseinheit 30 durchströmt. Infolge der Erhöhung der Ionenkonzentration erhöht sich dann auch die Rückstoßkraft und damit die Fahrtgeschwindigkeit des Schiffsrumpfes 66.

Es ist bekannt, daß bei einem Zylinderkondensator die elektrische Feldstärke von der in der Zylinderachse befindlichen Elektrode radial nach außen hin mit dem Kehrwert des Radius abnimmt. In Verbindung mit der ebenfalls nach außen hin abnehmenden magnetischen Feldstärke hat das zur Folge, daß auch die auf die Ladungsträger des Umgebungswassers ausgeübten Lorentz-Kräfte und dadurch der Vertrieb in axialer Richtung mit wachsendem Radius abnehmen.

Da dies im Einzelfall zu Turbulenzen oder Kavitationen führen kann, kann vorgesehen werden, diese radiale Abhängigkeit zu kompensieren bzw. zu optimieren. Hierzu kann die radiale Strecke zwischen den konzentrischen Elektroden in mehrere zylindrische Abschnitte unterteilt werden, indem mehrere konzentrische Rohre vorgesehen werden, die sich in unterschiedlichen radialen Abständen von der innersten Elektrode befinden. Legt man nun die verschiedenen Rohre an Abgriffe einer Spannungsquelle, so ergibt sich ein linearisierter Verlauf der elektrischen Spannung über dem Radius, wobei dieser Verlauf umso linearer gemacht werden kann, je feiner die Abstufung zwischen den verwendeten Rohren ist. Auch ist es möglich, die Verbindungsleitungen von den Rohren zur Spannungsquelle in nicht-linearer Weise so an die Spannungsquelle anzuschließen, daß der Verlauf noch weiter optimiert wird, z.B. um eine vom Radius unabhängige, konstante Beschleunigung zu erzielen.

Weiterhin ist es bei Ausführungsbeispielen der Erfindung möglich, den rohrförmigen Bereich der Toroidspulen vom Wassereintritt zum Wasseraustritt hin im querschnitt zu vergrößern, ihm also beispielsweise die Gestalt eines Kegels, eines Rotationsparaboloides oder eines Rotationshyperboloides zu verleihen.

Dabei können seitlich Ansaugöffnungen vorgesehen werden, durch die nach Art einer Wasserstrahlpumpe zusätzliches Wasser in den rohrförmigen Bereich eingesaugt werden kann.

Verwendet man nämlich einen durchgehenden rohrförmigen Bereich mit kostantem Querschnitt, so wird das durchströmende Wasser über die axiale Länge beständig der Lorentz-Kraft ausgesetzt, so daß bei einem kompressiblen Medium das austretende Medium gegenüber dem eintretenden Medium beschleunigt wäre. Da es sich bei Wasser aber bekanntlich um ein inkompressibles Medium handelt, erhöht sich durch den axialen Wirkungsbereich der Lorentz-Kräfte der Sog, und es kann demzufolge zu Wirbeln und Kavitationserscheinungen kommen. Dem wird durch die seitlichen Ansaugöffnungen begegnet, indem seitlich "frisches" Wasser angesaugt und gleichzeitig ein zunehmender Querschnitt zur Verfügung gestellt wird, so daß, mit anderen Worten, ein kompressibles Medium simuliert wird. Auf diese Weise kann insgesamt die Ausströmgeschwindigkeit des Wassers ebenso groß bemessen werden wie die Eintrittsgeschwindigkeit des Wassers, wobei jedoch infolge des größeren Querschnittes des Rohres am Austrittsende und infolge der zeitlichen Ansaugöffnungen die austretende Wassermenge pro Zeit größer ist.

Bei einem praktischen Ausführungsbeispiel der erfindungsgemäßen Antriebseinheit kann die Antriebseinheit 30 gemäß Fig. 4 beispielsweise so ausgelegt werden, daß das Rohr 31 einen Durchmesser von 1 m und eine Länge von 10 m erhält.

Als Toroidspule 32 kann eine Spule von beispielsweise 3 bis 4 T Magnetfeldstärke eingesetzt werden, wie man sie von der Kernphysik her kennt.

## Patentansprüche

1. Verfahren zum Antreiben von Wasserfahrzeugen, bei dem in einem von Umgebungswasser durchströmten rohrförmigen Bereich (36) ein magnetisches Feld (B) sowie ein elektrisches Feld (E) mit aufeinander im wesentlichen senkrecht stehenden Feldlinien (37, 41) erzeugt werden, derart, daß auf in dem Umgebungswasser befindliche Ladungsträger (22) eine Kraft (F) ausgeübt und diese Kraft (F) als Antriebskraft für das Wasserfahrzeug genutzt wird, wobei in dem rohrförmigen Bereich (36) ein axial gerichtetes Magnetfeld (B) sowie ein radial gerichtetes elektrisches Feld (E) erzeugt werden, dadurch gekennzeichnet, daß das Magnetfeld (B) mit um die Achse (27; 33) des rohrförmigen Bereichs geschlossen umlaufenden Feldlinien (41) erzeugt wird.

2. Verfahren nach Anspruch 1, dadurch gekennzeichnet, daß das elektrische Feld (B) mit Feldlinien (37) erzeugt wird, deren Richtung im wesentlichen die Achse (33) schneidet.

3. Vorrichtung zum Antreiben von Wasserfahrzeugen, bei der ein von Umgebungswasser durchströmter rohrförmiger Bereich (36) mit einer Magnetspule (12; 32; 51) versehen und in dem rohrförmigen Bereich (36) zwei mit einer Spannungsquelle (35) verbundene Elektroden (15; 34) angeordnet ist, derart, daß auf in dem Umgebungswasser befindliche Ladungsträger (22) eine Kraft (F) ausgeübt und diese Kraft (F) als Antriebskraft für das Wasserfahrzeug genutzt wird, dadurch gekennzeichnet, daß die Magnetspule als Toroidspule (24; 32; 51) ausgebildet und im wesentlichen koaxial zum Rohr (31) angeordnet ist, und daß die Elektroden (34a, 34b) in dem von Windungen (29) der Toroidspule (24; 32; 51) umgebenen Raum angeordnet sind.

4. Vorrichtung nach Anspruch 3, dadurch gekennzeichnet, daß der von den Windungen (29) der Toroidspule (24; 32; 51) umgebene Raum im Axialschnitt im wesentlichen rechteckformig ist.

5. Vorrichtung nach Anspruch 3, dadurch gekennzeichnet, daß der von den Windungen (29') der Toroidspule (24') umgebene Raum im Axialschnitt im wesentlichen biegespannungsfrei, vorzugsweise D-förmig ist.

6. Vorrichtung nach einem oder mehreren der Ansprüche 3 bis 5, dadurch gekennzeichnet, daß die achsnahen Leiter (25; 42) der Toroidspule (24; 32; 51) als dichtes Leiterbündel in der Achse (27; 33) verlaufen.

7. Vorrichtung nach einem oder mehreren der Ansprüche 3 bis 6, dadurch gekennzeichnet, daß die achsfernen Leiter (26; 44) der Toroidspule (24; 32) über ein im wesentlichen hohlzylindrisches und koaxial zur Achse (27; 33) angeordnetes hohlzylindrisches Volumen (45) verteilt angeordnet sind und einen im wesentlichen geschlossenen Mantel bilden.

8. Vorrichtung nach einem oder mehreren der Ansprüche 3 bis 6, dadurch gekennzeichnet, daß die achsfernen Leiter (52) der Toroidspule (51) zu mindestens zwei Leiterbündeln zusammengefaßt sind, die drehsymmetrisch über ein hohlzylindrisches und koaxial zur Achse angeordnetes Volumen verteilt angeordnet sind.

9. Vorrichtung nach einem oder mehreren der Ansprüche 3 bis 8, dadurch gekennzeichnet, daß die achsnahen Leiter (25; 42) mit den achsfernen Leitern (26; 44; 52) über radial verlaufende Leiterbündel (48) verbunden sind.

10. Vorrichtung nach Anspruch 9, dadurch gekennzeichnet, daß die radial verlaufenden Leiterbündel (48) drehsymmetrisch zur Achse (33) angeordnet sind.

11. Vorrichtung nach einem oder mehreren der Ansprüche 3 bis 10, dadurch gekennzeichnet, daß die Windungen (29) der Toroidspule (24) wenigstens teilweise in Reihe geschaltet sind.

12. Vorrichtung nach Anspruch 9 oder 10, dadurch gekennzeichnet, daß die radial verlaufenden Leiterbündel (48) getrennt mit Strom versorgt werden.

13. Vorrichtung nach einem oder mehreren der Ansprüche 3 bis 12, dadurch gekennzeichnet, daß die Elektroden (34a, 34b) als zylindrische Rohre ausgebildet sind, die mit radialem Zwischenraum koaxial zur Achse (33) angeordnet sind.

14. Vorrichtung nach einem oder mehreren der Ansprüche 3 bis 13, dadurch gekennzeichnet, daß die Spannungsquelle (35) in ihrer Ausgangsspannung und/oder Polarität einstellbar ist.

15. Vorrichtung nach einem oder mehreren der Ansprüche 9 bis 14, dadurch gekennzeichnet, daß die radial verlaufenden Leiterbündel (48) von konzentrischen Elektroden (57) umgeben sind.

16. Vorrichtung nach einem oder mehreren der Ansprüche 3 bis 15, dadurch gekennzeichnet, daß die Toroidspule (32; 51) eine supraleitende Spule ist.

17. Vorrichtung nach Anspruch 16, dadurch gekennzeichnet, daß die Spule aus einem Hochtemperatur-Supraleiter besteht.

18. Vorrichtung nach Anspruch 16 oder 17, dadurch gekennzeichnet, daß die supraleitende Spule im Kurzschluß betrieb betrieben wird.

19. Vorrichtung nach einem oder mehreren der Ansprüche 3 bis 18, dadurch gekennzeichnet, daß die aus Toroidspule (32: 51) und Elektroden (34a, 34b) gebildete Antriebseinheit (30; 50) in einen Schiffsrumpf (60) integriert ist.

20. Vorrichtung nach einem oder mehreren der Ansprüche 3 bis 19, dadurch gekennzeichnet, daß die aus Toroidspule (32; 51) und Elektroden (34a, 34b) gebildete Antriebseinheit (30: 50) an einem Ausleger (62) im Abstand von einem Schiffsrumpf (61) angeordnet ist.

21. Vorrichtung nach einem oder mehreren der Ansprüche 3 bis 20, dadurch gekennzeichnet, daß die aus Toroidspule (32; 51) und Elektroden (34a, 34b) gebildete Antriebseinheit (30; 50) in einen Kiel (64) eines Schiffsrumpfes (63) integriert ist.

22. Vorrichtung nach einem oder mehreren der Ansprüche 3 bis 21, dadurch gekennzeichnet, daß die aus Toroidspule (32; 51) und Elektroden (34a, 34b) gebildete Antriebseinheit (30; 50) zur Fahrtrichtung eines Schiffsrumpfes (65) geneigt, vorzugsweise schwenkbar (75, 76), angeordnet ist.

23. Vorrichtung nach einem oder mehreren der Ansprüche 3 bis 22, dadurch gekennzeichnet, daß an den rohrförmigen Bereich (36) eine Ionisiereinheit (67) angeschlossen ist.

24. Vorrichtung nach Anspruch 23, dadurch gekennzeichnet, daß mittels der Ionisiereinheit (67) dem Umgebungswasser eine dessen Leitfähigkeit erhöhende Substanz zugebbar ist.

25. Vorrichtung nach einem oder mehreren der Ansprüche 3 bis 24, dadurch gekennzeichnet, daß die auf die Ladungsträger (22) ausgeübte Kraft (F) in Abhängigkeit vom radialen Abstand von der Elektrode (34a, 34b) einstellbar ist.

26. Vorrichtung nach Anspruch 25, dadurch gekennzeichnet, daß der Verlauf der elektrischen Feldstärke (E) in Abhängigkeit vom radialen Abstand von der Elektrode (34) einstellbar ist.

27. Vorrichtung nach einem oder mehreren der Ansprüche 3 bis 26, dadurch gekennzeichnet, daß der rohrförmige Bereich (36) einen sich in Strömungsrichtung des Wassers vergrößernden Querschnitt hat.

28. Vorrichtung nach Anspruch 27, dadurch gekennzeichnet, daß der rohrförmige Bereich (36) mit seitlichen Ansaugöffnungen (90) versehen ist.

## Claims

1. A method for propelling water vehicles, wherein a magnetic field (B) and an electric field (E) with field lines (37, 41) being oriented essentially perpendicular to each other are generated in a pipe-shaped area (36) with surrounding water flowing therethrough, such that a force (F) is exerted upon charge carriers (22) within the surrounding water, and the force (F) is utilized as a propulsion force for the water vehicle, wherein, further, an axially directed magnetic field (B) as well as a radially directed electric field (E) are generated within the pipe-shaped area (36), characterized in that the magnetic field (B) is generated with field lines (41) extending circumferentially about the axis (27; 33) of the pipe-shaped area.

2. The method of claim 1, characterized in that the electric field (B) is generated with field lines (37), the direction of which essentially intersecting the axis (33).

3. An apparatus for propelling water vehicles, wherein a pipe-shaped area (36) with surrounding water flowing therethrough is provided with a magnet coil (12; 32; 51), and two electrodes (15; 34) being connected to a source of voltage (35) are arranged within the pipe-shaped area (36), such that a force (F) is exerted upon charge carriers (22) within the surrounding water, and the force (F) is utilized as a propulsion force for the water vehicle, characterized in that the magnet coil is designed as a toroid coil (24; 32; 51) and is arranged essentially coaxially with respect to the pipe (31), and that the electrodes (34a, 34b) are arranged within the area being surrounded by windings (29) of the toroid coil (24; 32; 51).

4. The apparatus of claim 3, characterized in that the area being surrounded by the windings (19) of the toroid coil (24; 32; 51) has an axial section being essentially rectangular.

5. The apparatus of claim 3, characterized in that the area surrounded by windings (29') of the toroid coil (24') has an axial section being essentially free of bending forces, and, in particular, D-shaped.

6. The apparatus of any of claims 3 through 5, characterized in that those conductors (25; 42) of the toroid coil (24; 32; 51) extending close to the axis, are designed as a dense conductor bundle within the axis (27; 33).

7. The apparatus of any of claims 3 through 6, characterized in that those conductors (26; 44) of the toroid coil (24; 32) extending distant from the axis are distributed over a hollow-cylindrical volume (45) arranged hollow-cylindrically and coaxially with respect to the axis (27; 33), and constituting an essentially closed wall.

8. The apparatus of any of claims 3 through 6, characterized in that those conductors (52) of the toroid coil (51) extending distant from the axis are comprised as at least two conductor bundles being arranged symmetrically in rotation over a hollow-cylindrically volume being coaxial with respect to the axis.

9. The apparatus of any of claims 3 through 8, characterized in that those conductors (25; 52) extending close to the axis and those conductors (26; 44; 52) extending distant from the axis are connected with each other by means of radially extending conductor bundles (48).

10. The apparatus of claim 9, characterized in that the conductor bundles (48) extending radially, are arranged symmetrical in rotation with respect to the axis (33).

11. The apparatus of any of claims 3 through 10, characterized in that the windings (29) of the toroid coil (24) are at least partially switched in series.

12. The apparatus of claim 9 or 10, characterized in that the conductor bundles (48) extending radially, are separately supplied with current.

13. The apparatus of any of claims 3 through 12, characterized in that the electrodes (34a, 34b) are designed as cylindrical pipes, being arranged coaxially with respect to the axis (33) with a radial gap.

14. The apparatus of any of claims 3 through 13, characterized in that the force of voltage (35) is designed adjustable in output voltage and/or polarity.

15. The apparatus of any of claims 9 through 14, characterized in that the conductor bundles (48) extending radially, are surrounded by concentric electrodes (57).

16. The apparatus of any of claims 3 through 15, characterized in that the toroid coil (32; 51) is a superconducting coil.

17. The apparatus of claim 16, characterized in that the coil consists of a high temperature superconductor.

18. The apparatus of claims 16 or 17, characterized in that the superconducting coil is operated in persistent mode.

19. The apparatus of any of claims 3 through 18, characterized in that the propulsion unit (30; 50) consisting of the toroid coil (32; 51) and the electrodes (34a, 34b) is integrated in a shiphull (60).

20. The apparatus of any of claims 3 through 19, characterized in that the propulsion unit (30; 50) consisting of the toroid coil (32; 51) and the electrodes (34a, 34b) is arranged in an outtrigger (62) distant from a shiphull (61).

21. The apparatus of any of claims 3 through 20, characterized in that the propulsion unit (30; 50) consisting of the toroid coil (32; 51) and the electrode (34a, 34b) is integrated in a keel (64) of a shiphull (63).

22. The apparatus of any of claims 3 through 21, characterized in that the propulsion unit (30; 50) consisting of the toroid coil (32; 51) and the electrodes (34a, 34b) is tilted with respect to the direction of driving of a shiphull (64), preferably is arranged pivotably (75, 76).

23. The apparatus of any of claims 3 through 22, characterized in that an ionization unit (67) is connected to the pipe-shaped area (36).

24. The apparatus of claim 23, characterized in that a substance increasing the conductivity of the surrounding water may be added thereto by means of the ionization unit (67).

25. The apparatus of any of claims 3 through 24, characterized in that the force (F) exerted on the charge carriers (22) may be adjusted as a function of the radial distance from the electrode (34a, 34b).

26. The apparatus of claim 25, characterized in that the slope of the electric field strength (E) as a function of the radial distance from the electrode (34) may be adjusted.

27. The apparatus of any of claims 3 through 26, characterized in that the pipe-shaped area (36) has a cross-section increasing along the direction of flow of the water.

28. The apparatus of claim 27, characterized in that the pipe-shaped area (36) is provided with lateral intake openings (90).

## Revendications

1. Procédé de propulsion de véhicules aquatiques, dans lequel, dans une zone de forme tubulaire (36) à travers laquelle passe l'eau environnante, sont produits un champ magnétique (B) et un champ électrique (E) ayant des lignes de champ (37, 41) sensiblement perpendiculaires les unes par rapport aux autres, de telle sorte qu'une force (F) s'exerce sur des porteurs de charge (22) présents dans l'eau environnante, et que cette force (F) soit utilisée comme force de propulsion pour le véhicule aquatique, le champ magnétique (B) créé dans la zone tubulaire (36) étant dirigé axialement et le champ électrique créé (E) étant dirigé radialement, caractérisé en ce que le champ magnétique produit (B) a ses lignes de champ (41) qui se referment autour de l'axe (27, 33) de la zone tubulaire.

2. Procédé selon la revendication 1, caractérisé en ce que les lignes de champ (37) du champ électrique (E) qui est créé, ont une direction pratiquement perpendiculaire à l'axe (33).

3. Dispositif pour la propulsion de véhicules aquatiques, dans lequel est prévue une zone de forme tubulaire (36) à travers laquelle passe l'eau environnante, munie d'une bobine d'excitation (12, 32, 51), deux électrodes (15, 34) situées dans la zone tubulaire (36) étant reliées à une source de courant (35), de telle sorte qu'une force (F) s'exerce sur des porteurs de charge (22) présents dans l'eau environnante, et que cette force (F) soit utilisée comme force de propulsion pour le véhicule aquatique, caractérisé en ce que la bobine d'excitation est une bobine de forme toroïdale (24, 32, 51) disposée pratiquement selon le même axe que le tube (31), et en ce que les électrodes (34a, 34b) sont disposées dans l'espace entouré par les enroulements (29) de la bobine toroïdale (24, 32, 51).

4. Dispositif selon la revendication 3, caractérisé en ce que l'espace entouré par les enroulements (29) de la bobine toroïdale (24, 32, 51) a une section transversale pratiquement rectangulaire.

5. Dispositif selon la revendication 3, caractérisé en ce que l'espace entouré par les enroulements (29') de la bobine toroïdale (24') a une section transversale pratiquement exempte de contraintes de flexion, de préférence en forme de D.

6. Dispositif selon l'une ou plusieurs des revendications 3 à 5, caractérisé en ce que les conducteurs (25, 42) situés près de l'axe de la bobine toroïdale (24, 32, 51) se présentent sous la forme d'un faisceau dense de conducteurs disposé selon l'axe (27, 33).

7. Dispositif selon l'une ou plusieurs des revendications 3 à 6, caractérisé en ce que les conducteurs (26, 44) éloignés de l'axe de la bobine toroïdale (24, 32) sont répartis en un volume cylindrique creux (45) dont le cylindrique creux est pratiquement dans l'axe (27 ; 33) et forme une enveloppe pratiquement fermée.

8. Dispositif selon l'une ou plusieurs des revendications 3 à 6, caractérisé en ce que les conducteurs (52) éloignés de l'axe de la bobine toroïdale (51) sont disposés en un minimum de deux faisceaux de conducteurs qui sont disposés en volumes de révolution, cylindriques creux dirigés selon l'axe.

9. Dispositif selon l'une ou plusieurs des revendications 3 à 8, caractérisé en ce que les conducteurs (25, 42) situés près de l'axe sont reliés aux conducteurs éloignés de l'axe (26, 44, 52) par des faisceaux de conducteurs (48) disposés radialement.

10. Dispositif selon la revendication 9, caractérisé en ce que la disposition des conducteurs radiaux (48) présente une symétrie de révolution autour de l'axe (33).

11. Dispositif selon l'une ou plusieurs des revendications 3 à 10, caractérisé en ce que les enroulements (29) de la bobine toroïdale (24) sont couplés au moins partiellement en série.

12. Dispositif selon l'une des revendications 9 ou 10, caractérisé en ce que les faisceaux de conducteurs (48) disposés radialement ont une alimentation électrique séparée.

13. Dispositif selon l'une ou plusieurs des revendications 3 à 12, caractérisé en ce que les électrodes (34a, 34b) ont la forme de tubes cylindriques disposés avec un espace intermédiaire radial selon le même axe (33).

14. Dispositif selon l'une ou plusieurs des revendications 3 à 13, caractérisé en ce que la tension de sortie et/ou la polarité de la source de courant (35) sont réglables.

15. Dispositif selon l'une ou plusieurs des revendications 9 à 14, caractérisé en ce que les faisceaux de conducteurs (48) disposés radialement sont entourés d'électrodes concentriques (57).

16. Dispositif selon l'une ou plusieurs des revendications 3 à 15, caractérisé en ce que la bobine toroïdale (32, 51) est une bobine supraconductrice.

17. Dispositif selon la revendications 16, caractérisé en ce que la bobine supraconductrice est constituée d'un supraconducteur haute température.

18. Dispositif selon la revendications 16 ou 17, caractérisé en ce que la bobine supraconductrice fonctionne en court-circuit.

19. Dispositif selon l'une ou plusieurs des revendications 3 à 18, caractérisé en ce que la bobine toroïdale (32, 51) et les électrodes (34a, 34b) constituent une unité d'entraînement (30, 50) qui est intégrée à la coque (60) d'un bateau.

20. Dispositif selon l'une ou plusieurs des revendications 3 à 19, caractérisé en ce que l'unité d'entraînement (30, 50) constituée par la bobine toroïdale (32, 51) et les électrodes (34a, 34b) est disposée sur un support (62) dépassant de la coque (61) d'un bateau.

21. Dispositif selon l'une ou plusieurs des revendications 3 à 20, caractérisé en ce que l'unité d'entraînement (30, 50) constituée par la bobine toroïdale (32, 51) et les électrodes (34a, 34b) est intégrée à la quille (64) de la coque (63) d'un bateau.

22. Dispositif selon l'une ou plusieurs des revendications 3 à 21, caractérisé en ce que l'unité d'entraînement (30, 50) constituée par la bobine toroïdale (32, 51) et les électrodes (34a, 34b) est disposée avec une inclinaison, de préférence orientable (75, 76), par rapport à l'axe de déplacement de la coque (65) d'un bateau.

23. Dispositif selon l'une ou plusieurs des revendications 3 à 22, caractérisé en ce qu'à la zone tubulaire (36) est raccordée une unité d'ionisation (67).

24. Dispositif selon la revendications 23, caractérisé en ce qu'il est possible, au moyen de l'unité d'ionisation (67), d'apporter à l'eau environnante une substance susceptible d'augmenter sa conductibilité.

25. Dispositif selon l'une ou plusieurs des revendications 3 à 24, caractérisé en ce que la force (F) qui s'exerce sur les porteurs de charge (22) est modifiable en fonction de la distance radiale aux électrodes (34a, 34b).

26. Dispositif selon la revendications 25, caractérisé en ce que le trajet des lignes de force du champ électrique (E) est modifiable en fonction de la distance radiale à l'électrode (34).

27. Dispositif selon l'une ou plusieurs des revendications 3 a 26, caractérisé en ce que la section transversale de la zone tubulaire (36) est croissante dans le sens de l'écoulement de l'eau.

28. Dispositif selon la revendication 27, caractérisé en ce que la zone tubulaire (36) comporte des ouvertures latérales d'aspiration (90).
